**Europäisches Patentamt**

(19) **European Patent Office**

**Office européen des brevets**

(11) Veröffentlichungsnummer: **0 015 546**
**B1**

(12) **EUROPÄISCHE PATENTSCHRIFT**

(45) Veröffentlichungstag der Patentschrift:
14.04.82

(21) Anmeldenummer: 80101111.5

(22) Anmeldetag: 10.03.80

(51) Int. Cl.³: **C 01 B 21/097, D 06 M 15/64**

(54) Aktive, hydroxyl- und halogenhaltige polymere Phosphornitride, Verfahren zu deren Herstellung und deren Verwendung.

(30) Priorität: **12.03.79 DE 2909600**

(43) Veröffentlichungstag der Anmeldung:
**17.09.80 Patentblatt 80/19**

(45) Bekanntmachung des Hinweises auf die Patenterteilung:
**14.04.82 Patentblatt 82/15**

(73) Patentinhaber: **HOECHST AKTIENGESELLSCHAFT,
Postfach 80 03 20, D-6230 Frankfurt/Main 80 (DE)**

(72) Erfinder: **Cremer, Joseph, Dr., Karl-Schurz-Strasse 6,
D-5030 Hürth (DE)**
Erfinder: **Harnisch, Heinz, Prof., Dr., Rehweg 10,
D-5000 Köln 40 (DE)**

(84) Benannte Vertragsstaaten:
**AT BE CH DE FR GB IT NL SE**

(56) Entgegenhaltungen:
**FR-A-2 307 764
CHEMICAL REVIEWS, Band 32, Nr. 1, Februar 1943 Baltimore, US, L.F. AUDRIETH et al.: «The phosphonitrilic
chlorides and their derivatives», Seiten 109–133**

# Aktive hydroxyl- und halogenhaltige polymere Phosphornitride, Verfahren zu deren Herstellung und deren Verwendung

Die Erfindung betrifft aktive, hydroxyl- und halogenhaltige polymere Phosphornitride, wobei Halogenatome und Hydroxylgruppen an die Phosphoratome der in Raumnetzstruktur vorliegenden Phosphornitride gebunden sind, sowie ein Verfahren zu ihrer Herstellung.

Die Herstellung von hydroxyl- und halogenhaltigen Phosphornitriden ist bereits von J.R. VAN WAZER in «Phosphorus and its Compounds», Verlag Interscience Publishers, Inc., New York, Vol. I, Seiten 309 und 320 beschrieben. Danach werden Ammoniak oder Ammoniumchlorid unter Druck bei 150–200 °C oder ohne Anwendung von Druck in Gegenwart eines Lösungsmittels und einer Temperatur von 135 °C zu Phosphornitrilchlorid der Formel $(PNCl_2)_3$ umgesetzt und letzteres durch milde Hydrolyse mit Wasser zu einem Produkt der Formel $P_3N_3Cl_4(OH)_2$ partiell hydrolysiert. In vorgenannter Verbindung beträgt der Halogengehalt 41,4 Gew.-% und der Sauerstoffgehalt 9,46 Gew.-%.

Nach der DE-A 2 516 915 ist ausserdem ein Verfahren zur Herstellung von Phosphornitriden der allgemeinen Formel $PN_x$, in welcher x eine Zahl von 0,9 bis 1,7 bedeutet, bekannt, wobei man Phosphorhalogenide mit überschüssigem Ammoniak in der Gasphase, vorzugsweise bei einer Temperatur zwischen dem Siede- bzw. Sublimationspunkt der Phosphorhalogenide und 200 °C, umsetzt und anschliessend das anfallende Reaktionsprodukt so lange auf Temperaturen bis 950 °C nacherhitzt, bis aus dem Reaktionsprodukt kein Ammoniak mehr entweicht.

Eine weitere Ausführungsform des Verfahrens der DE-A 2 516 915, welche in der DE-A 2 608 018 beschrieben ist und die Herstellung von Phosphornitriden mit hohem Schüttgewicht betrifft, sieht vor, die heissen Reaktionsprodukte mit Wasser abzuschrecken und aus der erhaltenen Suspension das Phosphornitrid abzutrennen. Die Ammonolyse des Phosphorhalogenids ist bei den Verfahren der DE-A 2 516 915 und 2 608 018 vollständig, so dass das Verfahrensprodukt ausschliesslich ein Phosphornitrid der genannten allgemeinen Formel darstellt.

Gegenstand der Erfindung sind nunmehr aktive, hydroxyl- und halogenhaltige polymere Phosphornitride, deren Halogenatome und Hydroxylgruppen an Phosphor gebunden sind und welche dadurch gekennzeichnet sind, dass sie 35 bis 54 Gew.-% Phosphor, 35 bis 47 Gew.-% Stickstoff, 1–20 Gew.-% Sauerstoff und 0,1 bis 8 Gew.-% Chlor enthalten.

Vorzugsweise enthalten die erfindungsgemässen Phosphornitride 37 bis 45 Gew.-% Phosphor, 39 bis 46 Gew.-% Stickstoff, 3 bis 12 Gew.-% Sauerstoff und 0,3 bis 5 Gew.-% Chlor.

Ein weiterer Gegenstand der Erfindung ist das Verfahren zur Herstellung von aktiven, hydroxyl- und halogenhaltigen polymeren Phosphornitriden, deren Halogenatome und Hydroxylgruppen an Phosphor gebunden sind und welche 35 bis 54 Gew.-% Phosphor, 35 bis 47 Gew.-% Stickstoff, 1 bis 20 Gew.-% Sauerstoff und 0,1 bis 8 Gew.-% Chlor enthalten, welches dadurch gekennzeichnet ist, dass man dampfförmige Phosphornitride mit überschüssigem Ammoniakgas bei einer Temperatur von 250–500 °C unter Bildung von halogenhaltigem Phosphornitrid und Ammoniumchlorid umsetzt, aus dem erhaltenen Reaktionsgemisch 5 bis 85 Gew.-% des vorhandenen Ammoniumchlorids bei der genannten Temperatur absublimiert, das verbleibende Reaktionsprodukt auf 0 bis 100 °C abkühlt, zur Lösung von restlichem Ammoniumchlorid sowie zur partiellen Hydrolyse des halogenhaltigen Phosphornitrids mit Wasser behandelt, das Phosphornitrid abfiltriert und trocknet.

Die Umsetzung des Phosphorchlorids mit dem Ammoniakgas erfolgt vorzugsweise bei einer Temperatur von 300–450 °C, wonach aus dem anfallenden Reaktionsgemisch 20–70 Gew.-% des entstandenen Ammoniumchlorids bei einer Temperatur von 350–490 °C absublimiert werden.

Schliesslich hat es sich als vorteilhaft erwiesen, das Reaktionsprodukt auf 20–60 °C abzukühlen und anschliessend mit Wasser während 5–50 Minuten, vorzugsweise 15–30 Minuten, zu behandeln. Das Behandeln des Reaktionsproduktes mit Wasser von 0–100 °C, vorzugsweise 20–80 °C, kann derart erfolgen, dass man das Reaktionsprodukt in Wasser digeriert und danach filtriert, oder indem man das Reaktionsprodukt mit Wasser auswäscht. Die Trocknung des Reaktionsproduktes kann beispielsweise bei 100 °C durchgeführt werden.

In dem als Endprodukt erhaltenen polymeren Nitrid liegen die Halogenatome sowie die Hydroxylgruppen vorwiegend als unverzweigte, endständige Seitenketten, gebunden an die Phosphoratome des polymeren, raumvernetzten Phosphornitrids, vor.

Die erfindungsgemässen hydroxyl- und halogenhaltigen Phosphornitride eignen sich gut zur flammhemmenden Ausrüstung von Cellulosefasern, insbesondere zum Flammfestmachen von Gewirken, d.h. sehr leichten Geweben. Für letztgenannte Cellulosefaser-Produkte gab es bisher keinen auf Basis Phosphornitrid befriedigenden Flammschutz, da die als Flammschutzmittel für Cellulosefasern bekannten reinen Phosphornitride sich nur für den Einsatz in normalen und schweren Geweben als geeignet erwiesen.

Zur Vermeidung langwieriger Testversuche zwecks Beurteilung der Verwendbarkeit der erfindungsgemässen Phosphornitride als Flammschutzmittel für Celluloseregeneratfasern, insbesondere leichten Geweben, wurde ein zu grob orientierenden Ergebnissen führender Screening-Test entwickelt, der es ermöglicht, reproduzierbar eine Vorauswahl unter den untersuchten Proben zu treffen.

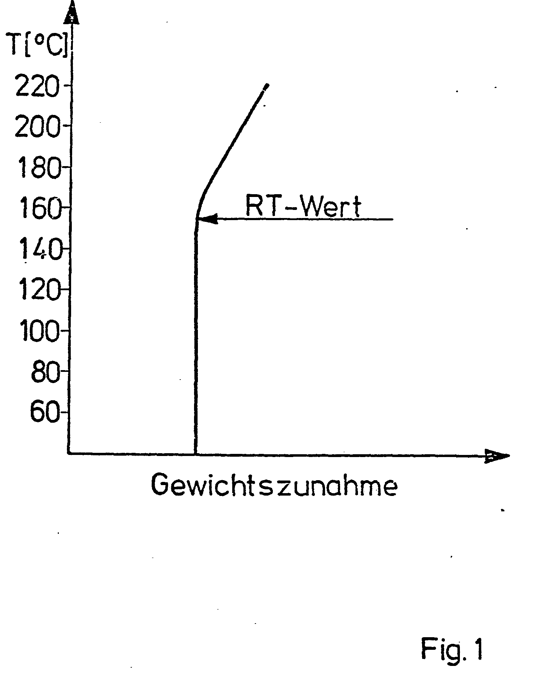

Zur Durchführung dieses Testes wird die zu prüfende Phosphornitridprobe in feinverteilter Form auf einer Thermowaage in feuchter Luft bei stetigem Temperaturanstieg erhitzt. Während bis zu 100 °C praktisch keine Gewichtsänderung der Probe eintritt, kann je nach Aktivität des Phosphornitrids im Temperaturbereich von 110–190 °C eine spontane Gewichtszunahme registriert werden, wobei der Beginn der spontanen Gewichtszunahme bzw. die zu diesem Zeitpunkt gemessene Reaktionstemperatur, welche als RT-Wert bezeichnet wird, für den Aktivitätsgrad der Probe charakteristisch ist. Die Gewichtszunahme ist auf die Umsetzung des Phosphornitrids mit dem Sauerstoff und dem Wasserdampf der Luft zurückzuführen, wobei das Nitrid zu Ammoniumpolyphosphat umgesetzt wird. Die Änderung des Gewichtes einer in der Thermowaage eingesetzten erfindungsgemässen Probe in Abhängigkeit von der Temperatur ist aus Figur 1 ersichtlich. Der RT-Wert dieser Probe liegt bei 155 °C.

Bezüglich der Verwendbarkeit der erfindungsgemässen Phosphornitride als Flammschutzmittel für leichte Gewebe aus Celluloseregeneratfasern hat sich nunmehr gezeigt, dass die nach DIN-Vorschrift Nr. 53 906 an das Flammschutzmittel gestellten Anforderungen nur von solchen Phosphornitriden erfüllt werden, deren RT-Wert 140–180 °C, vorzugsweise 155–165 °C, beträgt. Produkte mit einem RT-Wert <140 °C bewirken einen Kettenabbau des Cellulosemoleküls, während solche mit einem RT-Wert >180 °C als inaktive Phosphornitride zu bezeichnen sind, welche normalen und schweren Geweben einen ausreichenden, leichten Geweben jedoch einen unbefriedigenden Flammschutz vermitteln.

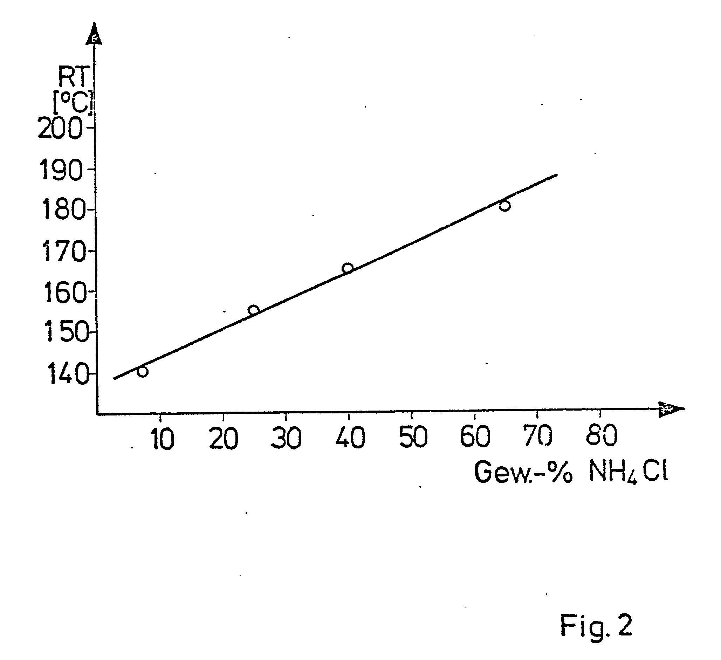

Der Zusammenhang zwischen RT-Wert der erfindungsgemässen Phosphornitride und der aus dem Umsetzungsprodukt aus dampfförmigem Phosphorchlorid mit Ammoniakgas absublimierten Menge Ammoniumchlorid ergibt sich aus Figur 2. Danach nimmt der Aktivitätsgrad des Phosphornitrids mit zunehmender Menge des absublimierten Ammoniumchlorids ab.

Die erfindungsgemässen Phosphornitride besitzen gegenüber den bekannten Phosphornitriden den Vorteil, dass sie nicht nur zum Flammfestmachen von leichten Geweben aus Celluloseregeneratfasern, sondern auch von normalen und schweren Geweben geeignet sind.

Beispiel 1

PCl₅ wurde im Stickstoffstrom verdampft und mit soviel NH₃-Gas in einen kühlbaren Reaktor eingespeist, dass im Abgas stets freies NH₃ nachweisbar war. Die Umsetzungstemperatur betrug 300 °C. Die Nacherhitzung des als lockeres Pulver anfallenden Reaktionsproduktes erfolgte in einem mit N₂ begasten Drehrohr solange bei 350 °C, bis ca. 7 Gew.-% des gebildeten Ammoniumchlorids absublimiert waren. Anschliessend wurde dieses Zwischenprodukt in einem Rührkessel mit soviel Wasser versetzt, dass sich noch vorhandenes Ammoniumchlorid restlos auflöste. Der unlösliche Rückstand wurde abfiltriert und gewaschen. Nach Trocknung des Rückstandes bei 100 °C besass das farblose Endprodukt einen Gehalt von 37 Gew.-% P, 39 Gew.-% N, 12 Gew.-% O und 10 Gew.-% Cl. Die auf P bezogene Ausbeute betrug 90 Gew.-%. Die Aktivität des Produktes bzw. dessen RT-Wert betrug 140 °C.

Ein mit dem erhaltenen Produkt ausgerüstetes leichtes Gewirke aus Celluloseregeneratfasern wurde nach DIN-Vorschrift 53 906 geprüft. Die gestellten Forderungen wurden uneingeschränkt erfüllt.

Bei Nichterfüllung von nur einer der nach DIN-Vorschrift 53 906 gestellten Bedingungen, wie z.B. Brenndauer oder Einreisslänge des Gewirkes bei 3 bzw. 15 Sekunden Beflammungszeit, lautet die Bewertung:
«Bedingungen eingeschränkt erfüllt».

Beispiel 2 (Vergleichsbeispiel)

PCl₅ wurde im N₂-Strom verdampft und mit soviel NH₃ in ein kühlbares Reaktionsgefäss eingespeist, dass im Abgas stets freies NH₃ nachgewiesen werden konnte. Die Reaktionstemperatur wurde in der Gasphase im Reaktor durch Kühlung zwischen 180–200 °C gehalten. Die Nacherhitzung erfolgte in einem beheizten Drehrohr im N₂/H₂-Strom bei 700 °C. Das anfallende, völlig farblose Phosphornitrid hatte 55 Gew.-% P- und 43 Gew.-% N-Gehalt. Die auf P bezogene Ausbeute betrug 98 Gew.-%. Die Aktivität des Produktes bzw. dessen RT-Wert betrug 200 °C. Die Bedingungen nach DIN-Vorschrift 53 906 wurden nur eingeschränkt erfüllt.

Beispiel 3

Es wurde analog Beispiel 1 verfahren, wobei jedoch die Umsetzungstemperatur 350 °C, die Nacherhitzungstemperatur 400 °C und die Menge des absublimierten Ammoniumchlorids etwa 25 Gew.-% betrugen. Die Hydrolyse erfolgte 40 Minuten bei 30 °C. Das getrocknete Endprodukt besass einen Gehalt von 40 Gew.-% P, 41 Gew.-% N, 10 Gew.-% O und 8 Gew.-% Cl. Die auf P bezogene Ausbeute betrug 92 Gew.-% und die Aktivität des Produktes RT = 155 °C.

Nach dem Prüfungsergebnis gemäss DIN-Vorschrift 53 906 erfüllt das flammhemmend ausgerüstete Gewirke die gestellten Bedingungen uneingeschränkt.

Beispiel 4

Es wurde analog Beispiel 1 verfahren, wobei jedoch die Umsetzungstemperatur 400 °C, die Nacherhitzungstemperatur 450 °C und die Menge des absublimierten Ammoniumchlorids etwa 40 Gew.-% betrugen. Die Hydrolyse erfolgte 25 Minuten bei 60 °C. Das getrocknete Endprodukt besass einen Gehalt von 42 Gew.-% P, 44 Gew.-% N, 8 Gew.-% O und 4 Gew.-% Cl. Die auf P bezogene Ausbeute betrug 93 Gew.-% und die Aktivität des Produktes RT = 165 °C.

Nach dem Prüfungsergebnis gemäss DIN-Vorschrift 53 906 erfüllt das flammhemmend ausgerüstete Gewirke die gestellten Bedingungen uneingeschränkt.

Beispiel 5

Es wurde analog Beispiel 1 verfahren, wobei jedoch die Umsetzungstemperatur 450 °C, die Nacherhitzungstemperatur 490 °C und die Menge des absublimierten Ammoniumchlorids etwa 65 Gew.-% betrugen. Die Hydrolyse erfolgte 20 Minuten bei 70 °C. Das getrocknete Endprodukt besass einen Gehalt von 48 Gew.-% P, 43 Gew.-% N, 4 Gew.-% O und 2 Gew.-% Cl. Die auf P bezogene Ausbeute betrug 91 Gew.-% und die Aktivität des Produktes RT = 180 °C.

Nach dem Prüfungsergebnis gemäss DIN-Vorschrift 53 906 erfüllt das flammhemmend ausgerüstete Gewirke die gestellten Bedingungen uneingeschränkt.

**Patentansprüche**

1. Aktive, hydroxyl- und halogenhaltige polymere Phosphornitride, deren Halogenatome und Hydroxylgruppen an Phosphor gebunden sind, dadurch gekennzeichnet, dass sie 35 bis 54 Gew.-% Phosphor, 35 bis 47 Gew.-% Stickstoff, 1 bis 20 Gew.-% Sauerstoff und 0,1 bis 8 Gew.-% Chlor enthalten.

2. Phosphornitride nach Anspruch 1, dadurch gekennzeichnet, dass sie 37 bis 48 Gew.-% Phosphor, 39 bis 46 Gew.-% Stickstoff, 3 bis 12 Gew.-% Sauerstoff und 0,3 bis 5 Gew.-% Chlor enthalten.

3. Verfahren zur Herstellung von aktiven, hydroxyl- und halogenhaltigen polymeren Phosphornitriden, deren Halogenatome und Hydroxylgruppen an Phosphor gebunden sind und welche 35 bis 54 Gew.-% Phosphor, 35 bis 47 Gew.-% Stickstoff, 1 bis 20 Gew.-% Sauerstoff und 0,1 bis 8 Gew.-% Chlor enthalten, dadurch gekennzeichnet, dass man dampfförmige Phosphorchloride mit überschüssigem Ammoniakgas bei einer Temperatur von 250–500 °C unter Bildung von halogenhaltigem Phosphornitrid und Ammoniumchlorid umsetzt, aus dem erhaltenen Reaktionsgemisch 5 bis 85 Gew.-% des vorhandenen Ammoniumchlorids bei der genannten Temperatur absublimiert, das verbleibende Reaktionsprodukt auf 0 bis 100 °C abkühlt, zur Lösung von restlichem Ammoniumchlorid sowie zur partiellen Hydrolyse des halogenhaltigen Phosphornitrids mit Wasser behandelt, das Phosphornitrid abfiltriert und trocknet.

4. Verfahren nach Anspruch 3, dadurch gekennzeichnet, dass man das Phosphorchlorid mit Ammoniakgas bei einer Temperatur von 300–450 °C umsetzt.

5. Verfahren nach Anspruch 3 oder 4, dadurch gekennzeichnet, dass man 20–70 Gew.-% des Ammoniumchlorids absublimiert.

6. Verfahren nach Anspruch 3–5, dadurch gekennzeichnet, dass man das Ammoniumchlorid bei einer Temperatur von 350–490 °C absublimiert.

7. Verfahren nach Anspruch 3–6, dadurch gekennzeichnet, dass man das Reaktionsprodukt auf 20–60 °C abkühlt und mit Wasser von 0–100 °C, vorzugsweise 20–40 °C, behandelt.

8. Verfahren nach Anspruch 3–7, dadurch gekennzeichnet, dass man das Reaktionsprodukt 5–50 Minuten, vorzugsweise 15–30 Minuten, mit Wasser behandelt.

9. Verwendung der aktiven hydroxyl- und halogenhaltigen polymeren Phosphornitride nach Anspruch 1–8 zur flammfesten Ausrüstung von leichten Gewirken aus Celluloseregeneratfasern.

**Revendications**

1. Nitrures de phosphore polymère, hydroxylés et halogénés, actifs, dont les atomes d'halogène et les groupes hydroxyle sont liés au phosphore, caractérisés en ce qu'ils contiennent 35–54% en poids de phosphore, 35–47% en poids d'azote, 1–20% en poids d'oxygène et 0,1–8% en poids de chlore.

2. Nitrures de phosphore selon la revendication 1, caractérisés en ce qu'ils contiennent 37–48% en poids de phosphore, 39–46% en poids d'azote, 3–12% en poids d'oxygène et 0,3–5% en poids de chlore.

3. Procédé de préparation de nitrures de phosphore polymères, hydroxylés et halogénés, actifs, dont les atomes d'halogène et les groupes hydroxyle sont liés au phosphore et qui contiennent 35–54% en poids de phosphore, 35–47% en poids d'azote, 1–20% en poids d'oxygène et 0,1–8% en poids de chlore, caractérisé en ce que l'on fait réagir des chlorures de phosphore gazeux avec un excès d'ammoniac gazeux à une température de 250–500 °C avec formation de nitrure de phosphore halogéné et de chlorure d'ammonium, on chasse du mélange de réaction par sublimation 5–85% en poids du chlorure d'ammonium à la température spécifiée, on refroidit le reste du produit de réaction à 0–100 °C, puis on le traite par l'eau pour dissoudre le chlorure d'ammonium résiduel et pour hydrolyser partiellement le nitrure de phosphore halogéné, on sépare le nitrure de phosphore par filtration et on le sèche.

4. Procédé selon la revendication 3, caractérisé en ce que l'on fait réagir le chlorure de phosphore avec l'ammoniac gazeux à une température de 300–450 °C.

5. Procédé selon la revendication 3 ou 4, caractérisé en ce que l'on chasse par sublimation 20–70% en poids du chlorure d'ammonium.

6. Procédé selon l'une des revendications 3 à 5, caractérisé en ce que l'on chasse le chlorure d'ammonium par sublimation à une température de 350–490 °C.

7. Procédé selon l'une des revendications 3 à 6, caractérisé en ce que l'on refroidit le produit de réaction à 20–60 °C et on le traite par de l'eau à 0–100 °C, de préférence 20–40 °C.

8. Procédé selon l'une des revendications 3 à 7, caractérisé en ce que l'on traite le produit de réaction par l'eau pendant 5 à 50 min, de préférence 15–30 min.

9. Utilisation des nitrures de phosphore polymères, hydroxylés et halogénés, actifs, selon l'une des revendications 1 à 8 pour l'ignifugation de tissus à mailles légers en fibres de cellulose régénérée.

**Claims**

1. Active polymeric phosphorus nitrides containing hydroxyl and halogen, the halogen atoms and hydroxyl groups being linked to phosphorus, characterized in that they contain 35 to 54 weight% of phosphorus, 35 to 47 weight% of nitrogen, 1 to 20 weight% of oxygen, and 0.1 to 8 weight% of chlorine.

2. Phosphorus nitrides as claimed in claim 1 characterized in that they contain 37 to 48 weight% of phosphorus, 39 to 46 weight% of nitrogen, 3 to 12 weight% of oxygen and 0.3 to 5 weight% of chlorine.

3. Process for making active polymeric phosphorus nitrides containing hydroxyl and halogen, whose halogen atoms and hydroxyl groups are linked to phosphorus and which contain 35 to 54 weight% of phosphorus, 35 to 47 weight% of nitrogen, 1 to 20 weight% of oxygen, and 0.1 to 8 weight% of chlorine, characterized in that phosphorus chlorides in vapor form are reacted with an excess of gaseous ammonia at a temprature of 250 to 500 °C with formation of a halogen-containing phosphorus nitride and ammonium chloride, 5 to 85 weight% of the ammonium chlorides is separeted from the reaction mixture by sublimation at the temperature specified, the remaining reaction product is cooled down to 0 to 100 °C, treated with water so as to dissolve residual ammonium chloride and partially to hydrolyze the halogen-containing phosphorus nitride, the phosphorus nitride is filtered of and dried.

4. Process as claimed in claim 3, wherein the phosphorus chloride is reacted with gaseous ammonia at a temperature of 300 to 450 °C.

5. Process as claimed in claim 3 or 4, wherein 20 to 70 weight% of ammonium chloride is separated by sublimation.

6. Process as claimed in any of claims 3 to 5, wherein the ammonium chloride is separated by sublimation at a temperature of 350 to 490 °C.

7. Process as claimed in any of claims 3 to 6, wherein the reaction product is cooled down to 20 to 60 °C and treated with water of 0 to 100 °C, preferably 20 to 40 °C.

8. Process as claimed in any of claims 3 to 7, wherein the reaction product is water-treated over a period of 5 to 50 minutes, preferably 15 to 30 minutes.

9. Use of the active polymeric phosphorus nitride containing hydroxyl and halogen as claimed in any of claims 1 to 8 for flameproofing of light knitted good of fibers of regenerated cellulose.

Fig. 1

Fig. 2